# EUROPÄISCHE PATENTSCHRIFT

(11) **EP 1 030 123 B1**
(45) Veröffentlichungstag und Bekanntmachung des Hinweises auf die Patenterteilung: **16.11.2005**
(21) Anmeldenummer: 00102264.9
(22) Anmeldetag: 15.02.2000
(51) Int. Cl.: F24D 10/00

(54) **Blockheizkraftwerk**
Heating and power unit
Groupe de chauffage et de puissance

(30) Priorität: 16.02.1999 AT 22299
(43) Veröffentlichungstag der Anmeldung: 23.08.2000
(73) Patentinhaber: Vaillant GmbH, 42859 Remscheid (DE)
(72) Erfinder: Berg, Joachim, 42859 Remscheid (DE); Kehl, Reinhold, 42929 Wermelskirchen (DE); Paulus, Jochen, 42655 Solingen (DE)
(74) Vertreter: Hocker, Thomas

(56) Entgegenhaltungen:
- US-A- 5 345 786
- US-A- 5 819 843

## Beschreibung

Die Erfindung bezieht sich auf ein Blockheizkraftwerk gemäß dem Oberbegriff des Anspruches 1.

Solche Blockheizkraftwerke eignen sich besonders für Anwendungen, bei denen eine Abdeckung eines erheblichen Wärmebedarfs erforderlich ist. Bei bekannten derartigen Blockheizkraftwerken wird der Wärmetauscher vom Brenner und von der Brennstoffzelle gemeinsam beaufschlagt. Dabei ergibt sich jedoch das Problem, daß es bei einem Betriebszustand, bei dem lediglich eine Stromanforderung vorliegt, der Brenner zwar abgeschaltet werden kann, doch besteht auch dann das Problem, daß es zu einer Überhitzung des Wärmetauschers allein durch die Abgase der Brennstoffzelle kommen kann, wenn nicht Vorkehrungen getroffen werden, die Wärme aus dem Wärmetauscher abzuführen. Dabei ist jedoch ein nicht unerheblichen Konstruktionsaufwand erforderlich, um die Voraussetzungen hierfür zu schaffen.

Ziel der Erfindung ist es, diese Nachteile zu vermeiden und ein Blockheizkraftwerk der eingangs erwähnten Art vorzuschlagen, dessen Betrieb gut an unterschiedliche Betriebsanforderungen angepaßt werden kann.

Erfindungsgemäß wird dies bei einem Blockheizkraftwerk der eingangs erwähnten Art durch die kennzeichnenden Merkmale des Anspruches 1 erreicht.

Durch die vorgeschlagenen Maßnahmen kann sehr einfach ein Betrieb durchgeführt werden, bei dem ausschließlich Strom erzeugt wird, wobei durch das dem vom Brenner beaufschlagbaren Wärmetauscher nachgeschalteten Gebläse die von der Brennstoffzelle in den von dieser beaufschlagten Wärmetauscher eingebrachte Wärme sehr leicht und problemlos abgeführt werden kann. Dadurch ist eine sehr gute Anpassung des Betriebes eines erfindungsgemäßen Blockheizkraftwerks an unterschiedliche Betriebsanforderungen möglich.

Das Gebläse kann saugseitig mit der Ausströmseite des vom Brenner beaufschlagten Wärmetauschers und druckseitig mit der Ausströmseite des von der Brennstoffzelle beaufschlagten Wärmetauschers verbunden sein. Grundsätzlich ist es aber auch möglich das Gebläse zwischen dem Brenner und dem von diesem beaufschlagten Wärmetauscher, oder vor dem Brenner anzuordnen.

Außerdem kann die Wärme der Brenngase des Brenners sehr weitgehend ausgenutzt werden, die einerseits in dem vom Brenner allein beaufschlagten Wärmetauscher einen Teil der Wärme abgibt und danach die restliche Wärme in den von der Brennstoffzelle beaufschlagten Wärmetauscher abgibt.

In diesem Zusammenhang ist es besonders vorteilhaft, wenn die Merkmale des Anspruches 2 vorgesehen sind.

Durch die Merkmale des Anspruches 3 ergibt sich der Vorteil, daß eine entsprechend kompakte Bauweise möglich wird.

Es kann auch vorgesehen sein, daß das Gebläse ein Bestandteil des Brennstoffzellen/Reformer-Aggregates ist und beliebig auf dem Weg zwischen Luft/Gas-Eintritt und Abgasaustritt angeordnet ist.

Durch die Merkmale des Anspruches 4 können die wesentlichen Teile des Blockheizkraftwerks individuell geregelt werden, wodurch eine sehr gute Anpassung des Betriebs an die jeweiligen Anforderungen möglich ist.

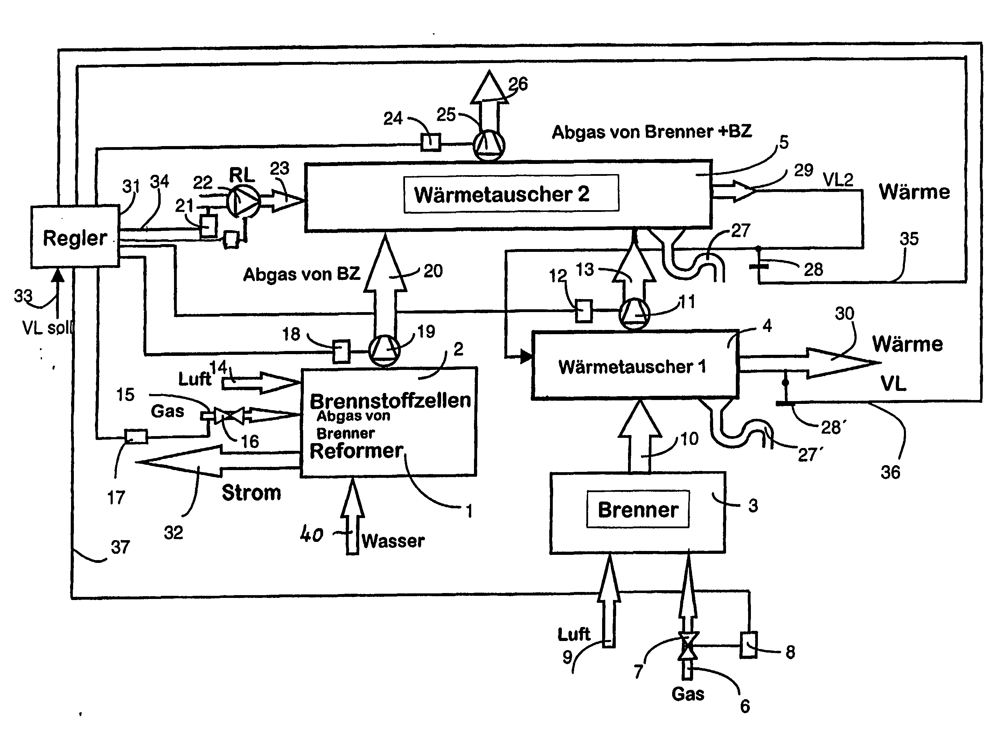

Die Erfindung wird nun anhand der Zeichnung näher erläutert, die schematisch ein erfindungsgemäßes Blockheizkraftwerk zeigt.

Bei einem erfindungsgemäßen Blockheizkraftwerk ist ein Brennstoffzellenstapel 2 mit zugehörigem Reformer 1 vorgesehen, die mit Wasser über eine Leitung 40 und über eine Luftleitung 14 mit Luft, sowie über eine Gasleitung 15 mit Gasventil 16 mit Gas versorgbar sind. Weiter führt eine elektrische Ausleitung 32 von dem Brennstoffzellenstapel 2 weg.

An der Abgasseite des Brennstoffzellenstapels 2 ist eine Abgasführung 20 angeordnet, die mit einem Gebläse 19 versehen ist, das über ein Stellglied 18 steuerbar ist. Diese Abgasführung 20 führt zu einem als Brennwert-Wärmetauscher ausgebildeten Wärmetauscher 5, der mit einem Kondensatablauf 27 versehen ist.

Dieser Wärmetauscher 5 ist an eine Rücklaufleitung 23 einer Heizungsanlage angeschlossen, in der eine Umwälzpumpe 22 und ein Durchflußmengenmesser 21 angeordnet sind. Letzterer ist über eine Signalleitung 34 mit einem Regler 31 verbunden, der mit einem Sollwerteingang 33 für die Vorlauftemperatur versehen ist und das gesamte Blockheizkraftwerk regelt.

Vom Wärmetauscher 5 führt eine Vorlaufleitung 29 zu einem weiteren Wärmetauscher 4, von dem eine Heizungs-Vorlaufleitung 30 wegführt. Dabei ist in der Vorlaufleitung 29 ein Temperatursensor 28 angeordnet, der über eine Signalleitung 35 mit dem Regler 31 verbunden ist. Weiter ist auch in der Heizungs-Vorlaufleitung 30 ein Temperatursensor 28" angeordnet, der über eine Signalleitung 36 mit dem Regler 31 verbunden ist.

Vom Wärmetauscher 5 führt abgasseitig ein Abgasrohr 26 weg, in dem ein Gebläse 25 angeordnet ist, dessen Antriebsmotor über ein Stellglied 24 steuerbar ist.

Weiter ist ein Brenner 3 vorgesehen, der über eine Luftleitung 9 mit Luft und über eine Gasleitung 6 mit Gasventil 7 mit Gas versorgbar ist. Dabei ist das Gasventil mittels eines Stellgliedes 8 betätigbar. Dieser Brenner 3 beaufschlagt mit seinen Brenngasen 10 den Wärmetauscher 4.

Abgasseitig ist der Wärmetauscher 4 über eine Abgasführung 13, die auch ein Gebläse 11 aufweist, das mittels eines Stellgliedes 12 steuerbar ist, mit dem Wärmetauscher 5 verbunden, so daß dieser mit den Wärmetauscher 4 verlassenden Brenngasen des Brenners 3 beaufschlagbar ist. Dabei ist auch der Wärmetauscher 4 mit einem Kondensatablauf 27 versehen.

Der Regler 31 ist über eine Steuerleitung 37 mit dem Stellglied 8 des Gasventiles 7 zur Versorgung des Brenners 3 verbunden. Weiter ist der Regler 31 über eine Steuerleitung 38 mit einem Stellglied 17 zur Steuerung des Gasventiles 16 zur Versorgung des Reformers 1 verbunden.

Beim Betrieb des Blockheizkraftwerks wird bei gleichzeitiger Wärme- und Stromanforderung sowohl der Brennstoffzellenstapel 2 mit Wasser, Gas und Luft versorgt, wobei dies entsprechend der geforderten Leistung der Brennstoffzelle 2 mittels des vom Regler 31 gesteuerten Stellgliedes 17 erfolgt. Weiter wird auch der Brenner 3 mit Gas und Luft entsprechend der Ansteuerung des Stellgliedes 8 durch den Regler 31 erfolgt.

Dabei wird der erzeugte Strom über die Ausleitung 32 abgeleitet.

Das anfallende heiße Abgas des Brennstoffzellenstapels 2 wird dem Wärmetauscher 5 über die Abgasführung 20 zugeführt und gibt dort seine Wärme einschließlich der Kondensationswärme ab und erwärmt das Heizwasser im Wärmetauscher 5, das dem Wärmetauscher 4 zugeführt wird.

Der Wärmetauscher 4 wird von den Brenngasen 10 des Brenners 3 beaufschlagt, die in diesem einen Teil ihre Wärme abgeben. Die entsprechend abgekühlten Brenngase gelangen über die Abgasführung 13 zum Wärmetauscher 5 und geben dort den Rest ihrer Wärme einschließlich ihrer Kondensationswärme ab.

Das Heizwasser wird dabei im Wärmetauscher 4 auf die vorgesehene Vorlauftemperatur gebracht, wobei diese Temperatur mittels des Temperatursensors 28' überwacht wird.

Die Steuerung der Brennstoffzellen 2 und des Brenners 3 kann dabei durch den Regler 31 unabhängig voneinander erfolgen.

Bei geringerer Wärmeanforderung und bestehender Stromanforderung wird der Brenner 3 durch den Regler stillgesetzt.

Besteht keine Wärmeanforderung aber eine Stromanforderung, so wird zwar weiter der Wärmetauscher 5 von den heißen Abgasen der Brennstoffzellen 2 beaufschlagt, doch wird diese Wärme durch das Heizwasser, mangels einer Wärmeanforderung und daher stillstehender oder laufender Umwälzpumpe 22 nicht aufgenommen.

Zur Abfuhr der anfallenden Wärme wird in diesem Fall das Gebläse 11 trotz stillgesetztem Brenner 3 in Betrieb genommen und bläst Umgebungsluft durch den Wärmetauscher 5, wodurch die Wärme abgeführt und eine Überhitzung des Wärmetauschers vermieden wird.

## Patentansprüche

1. Blockheizkraftwerk mit einer Brennstoffzelle (2) samt zugehörigen Hilfsaggregaten (1) und einem Brenner (3), der einen Wärmetauscher (4) beaufschlagt, **dadurch gekennzeichnet, daß** ein weiterer, von den Abgasen der Brennstoffzelle (2) beaufschlagter Wärmetauscher (5) vorgesehen ist, wobei ein Gebläse (11) vorgesehen ist, das die beiden Wärmetauscher (4, 5) beaufschlagt.

2. Blockheizkraftwerk nach Anspruch 1, **dadurch gekennzeichnet, daß** der von der Brennstoffzelle (2) beaufschlagte Wärmetauscher (5) als Brennwert-Wärmetauscher ausgebildet ist, der mit einem Kondensatablauf (27) versehen ist.

3. Blockheizkraftwerk nach Anspruch 1 oder 2, **dadurch gekennzeichnet, daß** ein weiteres Gebläse (19) in einem die Brennstoffzelle (2) mit dem von dieser beaufschlagten Wärmetauscher (5) verbindenden Abgasführung (20) angeordnet ist.

4. Blockheizkraftwerk nach einem der Ansprüche 1 bis 3, bei dem eine Regelung vorgesehen ist, **dadurch gekennzeichnet, daß** die Brennstoffzelle (2) samt Hilfsaggregate und der Brenner (3) separat regelbar sind, wobei das dem vom Brenner (3) beaufschlagten Wärmetauscher (4) nachgeschaltete Gebläse (11) auch in Verbindung mit der Brennstoffzelle (2) steuerbar ist.

## Claims

1. A cogeneration heating plant comprising a fuel cell (2) with the associated auxiliary units (1) and a burner (3) supplying heat to a heat exchanger (4), **characterised in that** a further heat exchanger (5) heated by the waste gases of the fuel cell (2) is provided and that a blower (11) is provided which is connected to the two heat exchangers (4, 5).

2. A cogeneration heating plant as claimed in Claim 1 **characterised in that** the heat exchanger (5) supplied with heat by the fuel cell (2) is designed as a condensing heat exchanger provided with a condensate discharge (27).

3. A cogeneration heating plant as claimed in Claim 1 or 2 **characterised in that** a further blower (19) is arranged in the waste gas line (20) leading from the fuel cell (2) to the heat exchanger (5).

4. A cogeneration heating plant as claimed in any of the Claims 1 to 3 comprising control means **characterised in that** the fuel cell (2) with its auxiliary units and the burner (3) are separately controllable in such a way that the blower (11) arranged downstream of the heat exchanger (4) supplied by the burner (3) can also be controlled to operate in conjunction with the fuel cell (2).

## Revendications

1. Centrale thermique en montage-bloc avec une pile à combustible (2), y compris groupes auxiliaires (1) respectifs, et un brûleur (3) qui chauffe un échangeur de chaleur (4), **caractérisée par le fait qu**'il est prévu en outre un échangeur de chaleur (5) chauffé par les gaz d'échappement de la pile à combustible (2), un ventilateur (11) étant prévu pour les deux échangeurs de chaleur (4, 5).

2. Centrale thermique en montage-bloc suivant la revendication 1, **caractérisée par le fait que** l'échangeur de chaleur (5) chauffé par la pile à combustible (2) est réalisé comme échangeur de chaleur à condensation qui est muni d'un collecteur d'eau de condensation (27).

3. Centrale thermique en montage-bloc suivant la revendication 1 ou 2, **caractérisée par le fait qu'**un autre ventilateur (19) est prévu dans un conduit de gaz d'échappement (20) reliant la pile à combustible (2) à l'échangeur de chaleur (5) chauffé par elle.

4. Centrale thermique en montage-bloc suivant l'une des revendications 1 à 3, dotée d'un mode de régulation, centrale **caractérisée par le fait que** la pile à combustible (2) y compris groupes auxiliaires, et le brûleur (3) peuvent être réglés séparément, le ventilateur (11) faisant suite à l'échangeur de chaleur (4) chauffé par le brúleur (3) pouvant aussi être réglé en combinaison avec la pile à combustible (2).
